# EUROPEAN PATENT APPLICATION

(11) **EP 1 659 753 A1**
(43) Date of publication of application: **24.05.2006**
(21) Application number: 05025464.8
(22) Date of filing: 22.11.2005
(51) Int. Cl.: H04L 29/06, G06F 11/30, H04L 12/26

(54) **Monitoring control system and method**

(30) Priority: 22.11.2004 KR 2004095933
(71) Applicant: LG Electronics Inc., Yongdungpo-gu Seoul (KR)
(72) Inventor: Shin, Sang-Cheol, Manan-Gu Anyang Gyeonggi-Do (KR); Kim, Kyung-Hoon, Seodaemun-Gu Seoul (KR); Jung, Jong-Cheol, Seodaemun-Gu Seoul (KR); Jung, Young-Ho, Gangseo-Gu Seoul (KR)
(74) Representative: Katérle, Axel

(57) **Abstract**

Disclosed is a monitoring control system and method which can minimize network delay between a local side PC (50) and a phone side PC (70) when monitoring a mobile terminal (40). The monitoring control system comprises: a controller consecutively sending a plurality of monitoring requests for monitoring a mobile terminal (40) via the internet (60); and a monitoring unit being connected to the mobile terminal (40) and consecutively sending the controller a plurality of monitoring results corresponding to the plurality of monitoring requests received via the internet (60).

## Description

### BACKGROUND OF THE INVENTION

### 1. Field of the Invention

The present invention relates to a monitoring unit for a mobile terminal, and more particularly, to a monitoring control system and method.

### 2. Description of the Prior Art

Recently, as the types of services for mobile terminals are varied, the size of a program code supporting a plurality of services is increased. Moreover, as the operation of a mobile terminal becomes gradually complicated, interaction between many operations of the mobile terminal does not operate smoothly, thus making the mobile terminal unstable.

A mobile terminal designer monitors a mobile terminal, and then stabilizes the operation of the mobile terminal by using a debugging unit. For instance, the mobile terminal designer monitors a mobile terminal through a monitoring unit, and then debugs the mobile terminal (e.g., applications of the mobile terminal) by using the JTAG (joint test action group) Technologies of the debugging unit.

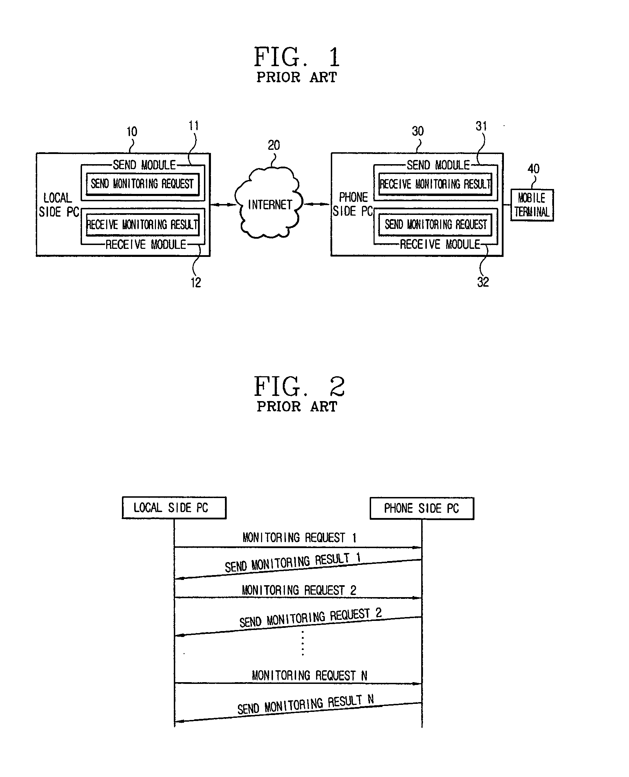

Hereinafter, a system for controlling a unit for monitoring the mobile terminal before debugging the mobile terminal will be described with reference to FIG.1.

FIG.1 is a view showing the configuration of a monitoring control system via the internet in accordance with the prior art. Here, a PC having a monitoring unit for monitoring a mobile terminal mounted therein is defined as a phone side PC, and a PC having a remote controller controlling the monitoring unit mounted therein is defined as a local side PC.

As shown in FIG.1, the phone side PC 30 and the local side PC 10 are interconnected via the internet 20, and the mobile terminal 40 is connected to a communication port (not shown) of the phone side PC 30. The local side PC 10 sends a monitoring request to the phone side PC 30, and the phone side PC 30 monitors the mobile terminal 40 according to the monitoring request of the local side PC 10 and then sends a monitoring result to the local side PC 10 via the internet 20. The local side PC 10 receives the monitoring result sent from the phone side PC 30.

Hereinafter, a detailed configuration and operation of the monitoring control system in accordance with the prior art will be described with reference to FIG.1.

A send module 11 of the local side PC 10 sends a monitoring request to the phone side PC 30 via the internet 20 according to a user request. A receive module 12 of the local side PC 10 receives a monitoring result from the phone side PC 30, and sends the received monitoring result to a display module (not shown).

A receive module 31 of the phone side PC 30 receives the monitoring request from the send module 11 of the local side PC 10, and transmits the monitoring request to a monitor module (not shown) of the phone side PC 10. A send module 32 of the phone side PC 30 receives a monitoring result from the monitor module, and sends the received monitoring result to the local side PC 10 via the internet. Here, the monitor module of the phone side PC 30 monitors the mobile terminal according to the monitoring request, and then sends the monitoring result to the send module 32.

FIG.2 is an operational flow chart of a monitoring control method via the internet in accordance with the prior art.

An assumption is made that before a user debugs the mobile terminal 40 connected to the phone side PC 30 by using the local side PC 10, the local side PC 10 sends a monitoring request to the phone side PC 30, and a message flow receiving a monitoring result from the phone side PC 30 is in an one-to-one monitoring mode.

The local side PC 10 sends the monitoring request generated by the user to the phone side PC 30, and the phone side PC 30 monitors the mobile terminal 40 according to the received monitoring request and then sends a monitoring result to the local side PC 10. That is, the local side PC 10 sends a single monitoring request to the phone side PC 30, receives a single monitoring result sent according to the single monitoring request from the phone side PC 30, and displays the received monitoring result of the mobile terminal on a screen of the local side PC 10.

Meanwhile, since the local side PC 10 generates a single monitoring request each time to monitor the mobile terminal 40, sends the generated single monitoring request to the phone side PC 30 via the internet, and receives a monitoring result corresponding to the single monitoring request, a network delay occurs due to the transit via the internet as the monitoring request and the monitoring result are received. For instance, in order to monitor three applications installed on the mobile terminal, the local side PC 10 sends Monitoring Request 1 for monitoring Application 1, sends Monitoring Request 2 for monitoring Application 2 when Monitoring Result 1 is received, sends Monitoring Request 3 for monitoring Application 3 when Monitoring Result 2 is received after sending Monitoring Request 2, and receives Monitoring Result 3 after sending Monitoring Request 3.

Consequently, a network delay occurs to the monitoring control system in accordance with the prior art, because it waits until a monitoring result is received and then sends another monitoring request when the monitoring result is received. Moreover, the monitoring control system in accordance with the prior art has a problem that in the even that a network delay occurs due to the transit via the internet when sending and receiving the monitoring request and the monitoring result, it cannot monitor the mobile terminal in real time. Besides, the monitoring control system in accordance with the prior art has a problem that the local side PC and the phone side PC are disconnected if the network delay becomes too long.

### SUMMARY OF THE INVENTION

Therefore, an object of the present invention is to provide a monitoring control system and method which can minimize network delay between a local side PC and a phone side PC when monitoring a mobile terminal.

Another object of the present invention is to provide a monitoring control system and method which can monitor a mobile terminal in real time by minimizing network delay between a local side PC and a phone side PC when monitoring the mobile terminal.

To accomplish the above objects, there is provided a monitoring control system in accordance with the present invention, comprising: a controller consecutively sending a plurality of monitoring requests for monitoring a mobile terminal via the internet; and a monitoring unit being connected to the mobile terminal and consecutively sending the controller a plurality of monitoring results corresponding to the plurality of monitoring requests received via the internet.

To accomplish the above objects, there is provided another monitoring control system in accordance with the present invention, comprising: a first PC generating a monitoring pattern including a plurality of monitoring requests for monitoring a plurality of applications of a mobile terminal and sending the monitoring pattern via the internet; and a second PC being connected to the mobile terminal, receiving the monitoring pattern via the internet, monitoring the plurality of applications according to the plurality of monitoring requests included in the monitoring pattern and then sending a plurality of monitoring results to the first PC via the internet.

To accomplish the above objects, there is provided a monitoring control method in accordance with the present invention, comprising the steps of: consecutively sending a plurality of monitoring requests for monitoring a plurality of applications of a mobile terminal via the internet; and monitoring the plurality of applications according to the plurality of monitoring requests sent via the internet and then consecutively sending the plurality of monitoring results.

To accomplish the above objects, there is provided another monitoring control method in accordance with the present invention, comprising the steps of: generating a monitoring pattern including a plurality of monitoring requests for monitoring a plurality of applications of a mobile terminal; sending the monitoring pattern to a unit for monitoring the mobile terminal; and monitoring the plurality of applications according to the plurality of monitoring requests included in the monitoring pattern and then consecutively sending a plurality of monitoring results.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG.1 is a view showing the configuration of a monitoring control system via the internet in accordance with the prior art;
FIG.2 is an operational flow chart of a monitoring control method via the internet in accordance with the prior art;
FIG.3 is a block diagram showing the configuration of a monitoring control system via the internet in accordance with an embodiment of the present invention;
FIG.4 is an exemplary view showing the sending and receiving times of a monitoring pattern and monitoring results in accordance with the present invention;
FIG.5 is an operating state diagram of a monitoring control method via the internet for explaining the present invention;
FIG.6 is an operational flow chart of the monitoring control method via the internet in accordance with the embodiment of the present invention; and
FIG.7 is an exemplary view showing an information list of the monitoring pattern and monitoring results of FIG.6.

### DETAILED DESCRIPTION OF THE PREFERRED EMBODIMENTS

Hereinafter, a PC having a controller consecutively sending a plurality of monitoring requests for monitoring a mobile terminal via the internet is defined as a local side PC. And, defined as a phone side PC is a PC having a monitoring unit being connected to the mobile terminal, receiving a plurality of monitoring requests via the internet, and monitoring a plurality of applications according to the plurality of monitoring requests and then consecutively sending a plurality of monitoring results to the controller via the internet.

An embodiment of the present invention will now be described in detail with reference to the accompanying drawings.

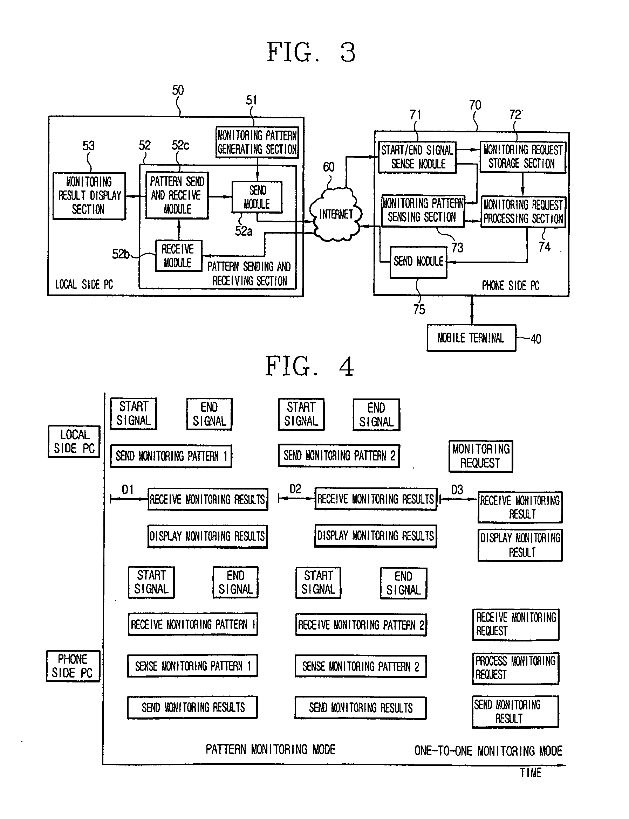

FIG.3 is a block diagram showing the configuration of a monitoring control system via the internet in accordance with an embodiment of the present invention.

As shown in FIG.3, the monitoring control system comprises a local side PC 50 generating a monitoring pattern including a plurality of monitoring requests for monitoring a mobile terminal 40, sending the monitoring pattern to a phone side PC 70 via the internet 60 and displaying a plurality of monitoring results sent from the phone side PC 70; and the phone side PC 70 being connected to the mobile terminal 40, receiving the monitoring pattern from the local side PC, monitoring the mobile terminal 40 according to the plurality of monitoring requests included in the monitoring pattern and then sending a plurality of monitoring results corresponding to the plurality of monitoring requests to the local side PC 50. Preferably, the local side PC 50 sequentially displays the plurality of monitoring results consecutively sent from the phone side PC 70, or displays the monitoring results by collating and sorting them.

Hereinafter, a detailed description of the monitoring control system in accordance with the embodiment of the present invention will be described. The following detailed description may be changed in various ways by those skilled in the art on the basis of the present invention.

The local side PC 50 includes: a monitoring pattern generating section 51 generating a monitoring pattern including a plurality of monitoring requests for monitoring a plurality of applications of a mobile terminal 40; a pattern sending and receiving section 52 sequentially outputting a start signal, the monitoring pattern and an end signal by starting to send the monitoring pattern, receiving the plurality of monitoring results outputted from the phone side PC 70 via the internet 60 and collating and sorting the received monitoring results; and a monitoring result display section 53 displaying the plurality of collated and sorted monitoring results. The monitoring pattern generating section 51 may generate a plurality of monitoring patterns including a plurality of monitoring requests according to a user request. Here, each monitoring request included in the monitoring pattern is a signal for monitoring each application executed on the mobile terminal 40.

The pattern sending and receiving section 52 consists of: a send module 52A sequentially outputting the start signal, the monitoring pattern and the end signal when starting to send the monitoring pattern for monitoring a plurality of applications of the mobile terminal 40; a receive module 52B receiving the plurality of monitoring results outputted from the phone side PC 70 via the internet 60 and collating and sorting the plurality of received monitoring results; and a pattern send and receive module 52C controlling the send module 52A and transmitting the plurality of monitoring results collated and sorted by the receive module 52B to the monitoring result display section 53.

The phone side PC 70 includes: a start/end signal sense module 71 sensing a start/end signal indicating the start and end of the monitoring pattern; a monitoring request store section 72 storing the plurality of monitoring requests included in the monitoring pattern sent through the start/end signal sense module 71 when the start signal is sensed by the start/end signal sense module 71; a monitoring pattern sensing section 73 sensing the monitoring pattern sent through the start/end signal sense module 71 and generating a monitoring sense signal when the start signal is sensed by the start/end signal sense module 71; a monitoring request processing section 74 monitoring the plurality of applications of the mobile terminal 40 according to the plurality of monitoring requests stored in the monitoring request storage section 72 after receiving the monitoring sense signal and then storing the plurality of monitoring results in a send buffer (not shown); and a send module 75 sending the plurality of monitoring results stored in the send buffer to the local side PC 50 via the internet 60.

Hereinafter, the operation of the detailed configuration of the monitoring control system in accordance with the embodiment of the present invention will be described in detail.

First, the monitoring pattern generating section 51 generates a monitoring pattern including a plurality of monitoring requests for monitoring a plurality of applications of the mobile terminal 40, and sends the generated monitoring pattern to the send module 52A.

When the monitoring pattern is received, the send module 52A sequentially sends a start signal for starting to send the monitoring pattern, the monitoring pattern and an end signal indicating the end of sending the monitoring pattern to the phone side PC 70. Here, the send module 52A sends the start signal, the monitoring pattern and the end signal to the start/end signal sense module 71 of the phone side PC 70 via the internet 60 under control of the pattern send and receive module 52C.

The start/end signal sense module 71 of the phone side PC 70 switches from the one-to-one monitoring mode to the pattern monitoring mode when it senses the start signal received via the internet. The start/end signal sense module 71 switches from the pattern monitoring mode to the one-to-one monitoring mode when it senses the end signal indicating the end of the monitoring pattern received via the internet 60. Here, the pattern monitoring mode is referred to as the mode for consecutively sending a plurality of monitoring results according to a plurality of consecutively sent monitoring requests after monitoring a plurality of applications.

When the start signal is received by the start/end signal sense module 71, the monitoring request storage section 72 stores the plurality of monitoring results included in the monitoring pattern received after the start signal.

When the start/end signal is received by the start/end signal sense module 71, the monitoring pattern sensing section 73 generates the monitoring pattern sent through the start/end signal sense module 71 after the start signal, and outputs a monitoring sense signal to the monitoring request processing section 74.

The monitoring request processing section 74 monitors a plurality of applications corresponding to the plurality of monitoring requests stored in the monitoring request storage section 72 according to the monitoring sense signal and then sequentially stores a plurality of monitoring results in a send buffer (not shown).

The send module 75 sends the plurality of monitoring results stored in the send buffer to the receive module 52B of the local side PC via the internet 60.

The receive module 52B receives the monitoring results received from the send module 75 of the phone side PC 70 via the internet 60, collates and sorts the plurality of received monitoring results and sends the plurality of collated and sorted monitoring results to the pattern send and receive module 52C.

The pattern send and receive module 52C sends the plurality of monitoring results collated and sorted by the receive module 52B to the monitoring result display section 53.

The monitoring result display section 53 displays the plurality of collated and sorted monitoring results on a screen.

FIG.4 is an exemplary view showing the sending and receiving times of a monitoring pattern and monitoring results in accordance with the present invention. Moreover, FIG.4 shows a pattern monitoring mode and an one-to-one monitoring mode.

As shown in FIG.4, in the pattern monitoring mode, the local side PC 50 sequentially sends a start signal and Monitoring Pattern 1 to the pone side PC 70, and the phone side PC 70 receives Monitoring Pattern 1 by sensing the start signal and then sends monitoring results corresponding to monitoring requests of Monitoring Pattern 1 to the local side PC 50. The local side PC 50 receives and displays the monitoring results transmitted from the phone side PC 70. Since the local side PC 50 consecutively receives and displays the monitoring results, network delay occurs only when receiving the first monitoring result and it is able to receive the monitoring results without network delay since the second result.

In the one-to-one monitoring mode, the local side PC 50 sends the phone side PC 70 one monitoring request instead of a monitoring pattern. The phone side PC 70 receives the monitoring request and sends a monitoring result corresponding to the monitoring request to the local side PC 50. The local side PC 50 receives and displays the one monitoring result transmitted from the phone side PC 70. The local side PC 50 receives a monitoring result each time it sends a monitoring request, unlike when it sends and receives a monitoring pattern, and thus network delay occurs.

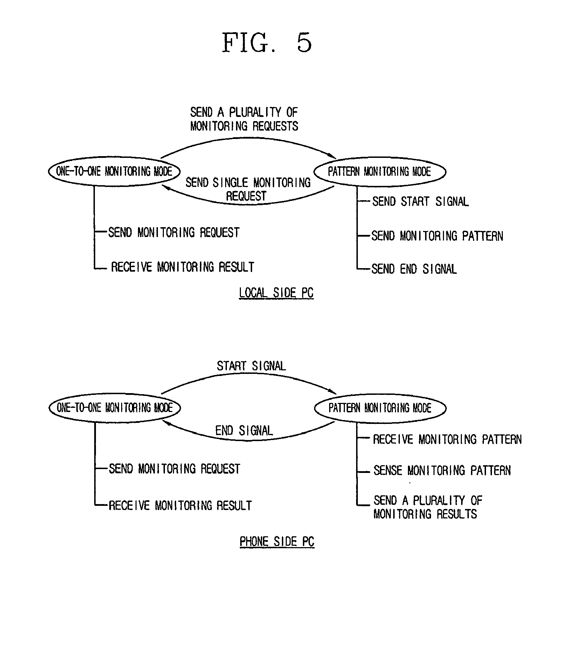

FIG.5 is an operating state diagram of a monitoring control method via the internet for explaining the present invention.

In the one-to-one monitoring mode, the local side PC 50 sends a monitoring request and receives a monitoring result corresponding to the monitoring request, and in the pattern monitoring mode, it sequentially sends a start signal, a monitoring pattern and an end signal and consecutively receives a plurality of monitoring results corresponding to a plurality of monitoring requests included in the monitoring pattern.

The phone side PC 70 receives a monitoring request and sends a monitoring result corresponding to the monitoring request in the one-to-one monitoring mode. When a start signal is received from the local side PC 50, it switches from the one-to-one monitoring mode to the pattern monitoring mode and then receives a monitoring pattern, and sends a plurality of monitoring results corresponding to a plurality of monitoring requests included in the monitoring pattern. Here, the phone side PC 70 switches from the pattern monitoring mode to the one-to-one monitoring mode when an end signal is received from the local side PC 50.

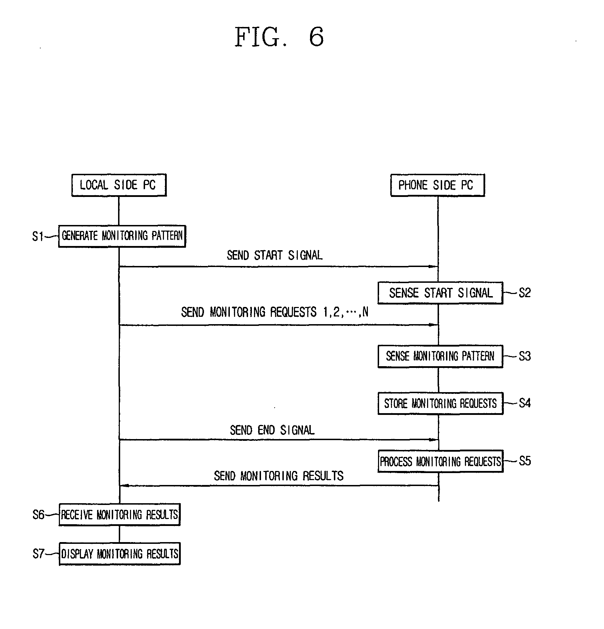

FIG.6 is an operational flow chart of the monitoring control method via the internet in accordance with the embodiment of the present invention.

Hereinafter, explanation will be given under the assumption that applications of a mobile terminal to be monitored are selected, the one-to-one monitoring mode is switched to the pattern monitoring mode, and then the applications of the mobile terminal connected to the phone side PC are debugged.

First, the local side PC 50 generates a monitoring pattern including a plurality of monitoring requests for monitoring a plurality of applications of the mobile terminal 40 in order to determine if the plurality of applications installed on the mobile terminal 40 normally operates according to a user request (S1).

The local side PC 50 sends a start signal indicating the start of sending the monitoring pattern to the phone side PC 70 in the pattern monitoring mode.

The phone side PC 70 senses the start signal sent from the local side PC 50 and then switches from the one-to-one monitoring mode to the pattern monitoring mode (S2).

The phone side PC 70 sense the monitoring pattern sent from the local side PC 50 after the start signal (S3), and sequentially sends the plurality of monitoring requests (Monitoring Requests 1, 2, ..., N) included in the monitoring pattern (S4).

The phone side PC 70 monitors the plurality of applications of the mobile terminal according to the plurality of stored monitoring requests, and then sends a plurality of monitoring results corresponding to the plurality of monitoring requests to the local side PC 50 (S5).

The local side PC 50 receives the plurality of monitoring results sent from the phone side PC 70 (S6), and sequentially displays the plurality of received monitoring results on a screen or collates and sorts the plurality of monitoring results and displays the collated and sorted monitoring results on the screen (S7).

Meanwhile, the local side PC 50 receives the plurality of monitoring results, and at the same time, when the plurality of monitoring requests are all sent to the phone side PC 70, it sends the phone side PC 70 an end signal indicating the end of sending the plurality of monitoring requests included in the monitoring pattern.

When the end signal is received, the phone side PC 70 sends all the plurality of monitoring results corresponding to the plurality of monitoring requests to the local side PC 50, and then switches from the pattern monitoring mode to the one-to-one monitoring mode. Here, the one-to-one monitoring mode is well known in the prior art, so a detailed description thereof will be omitted.

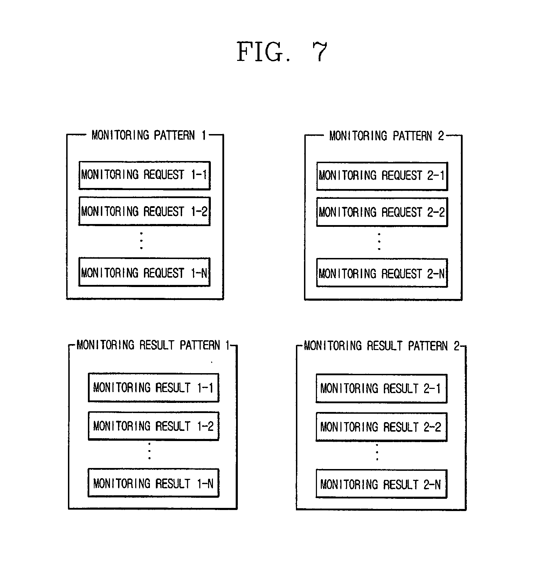

FIG.7 is an exemplary view showing an information list of the monitoring pattern and monitoring results of FIG.6. Monitoring Patterns 1 and 2 each consist of a plurality of monitoring requests for monitoring a plurality of applications of a mobile terminal. Monitoring Result Patterns 1 and 2 each consist of a plurality of monitoring results generated by monitoring the plurality of applications according to the plurality of monitoring requests. Here, the monitoring request processing section 74 sequentially sends the monitoring results, starting from the first generated result, to the local side PC through the send module 75, or sends a monitoring result pattern sequentially consisting of the plurality of monitoring results to the local side PC 50 through the send module 75.

As described above in detail, the monitoring control system and method in accordance with the present invention have the effect of minimizing network delay between the local side PC and the phone side PC when monitoring a mobile terminal by sequentially sending a plurality of monitoring requests to the phone side PC and consecutively receiving a plurality of monitoring results from the phone side PC.

Furthermore, the monitoring control system and method in accordance with the present invention have the effect of preventing disconnection due to network delay between the local side PC and the phone side PC since a mobile terminal is monitored in real time by minimizing network delay between the local side PC and the phone side PC when monitoring the mobile terminal.

## Claims

1. A monitoring control system, comprising:
a controller consecutively sending a plurality of monitoring requests for monitoring a mobile terminal via the internet; and
a monitoring unit being connected to the mobile terminal and consecutively sending the controller a plurality of monitoring results corresponding to the plurality of monitoring requests received via the internet.

2. The system of claim 1, wherein the monitoring unit monitors the plurality of applications of the mobile terminal according to the plurality of monitoring requests and then consecutively sends the plurality of generated monitoring requests to the controller.

3. The system of claim 1, wherein the controller displays the plurality of monitoring results consecutively sent from the monitoring unit.

4. The system of claim 1, wherein the controller consecutively displays the plurality of monitoring results or displays the same by collating and sorting the same.

5. The system of claim 1, wherein the controller includes:
a monitoring pattern generating section generating a monitoring pattern including a plurality of monitoring requests for monitoring a plurality of applications of a mobile terminal;
a pattern sending and receiving section sequentially sending a start signal indicating the start of sending the monitoring pattern, a monitoring pattern and an end signal indicating the end of sending the monitoring pattern, receiving the plurality of monitoring results sent from the monitoring unit and
sending the received monitoring results; and
a monitoring result display section displaying the plurality of sent monitoring results.

6. The system of claim 5, wherein the monitoring unit includes:
a signal sense module sensing the start/end signal;
a monitoring request storage section storing the plurality of monitoring requests included in the monitoring pattern sent through the signal sense module when the start signal is sensed by the signal sense module;
a monitoring pattern sensing section sensing the monitoring pattern sent through the signal sense module and generating a monitoring sense signal when the start signal is sensed by the signal sense module;
a monitoring request processing section monitoring the plurality of applications according to the plurality of monitoring requests stored in the monitoring request storage section after receiving the monitoring sense signal and then sending the plurality of monitoring results; and
a send module sending the plurality of monitoring results sent from the monitoring request processing section to the pattern sending and receiving section via the internet.

7. A monitoring control system, comprising:
a first PC generating a monitoring pattern including a plurality of monitoring requests for monitoring a plurality of applications of a mobile terminal and
sending the monitoring pattern via the internet; and
a second PC being connected to the mobile terminal, receiving the monitoring pattern via the internet, monitoring the plurality of applications according to the plurality of monitoring requests included in the monitoring pattern and
then sending a plurality of monitoring results to the first PC via the internet.

8. The system of claim 7, wherein the first PC displays the plurality of monitoring results sent from the second PC.

9. The system of claim 7, wherein the first PC sequentially displays the plurality of monitoring results or displays the same by collating and sorting the same.

10. The system of claim 7, wherein the first PC includes:
a monitoring pattern generating section generating the monitoring pattern;
a pattern sending and receiving section sequentially sending a start signal indicating the start of sending the monitoring pattern, the monitoring pattern and an end signal indicating the end of sending the monitoring pattern and
collating and sorting the monitoring results sent from the first PC; and
a monitoring result display section displaying the plurality of collated and
sorted monitoring results.

11. The system of claim 10, wherein the pattern sending and receiving section consists of:
a send module sequentially outputting the start signal, the monitoring pattern and the end signal;
a receive module receiving the plurality of monitoring results sent from the second PC via the internet and collating and sorting the plurality of received monitoring results; and
a pattern send and receive module controlling the send module and
transmitting the plurality of monitoring results collated and sorted by the receive module to the monitoring result display section.

12. The system of claim 10, wherein the second PC includes:
a signal sense module sensing the start signal and the end signal;
a monitoring request store section storing the plurality of monitoring requests included in the monitoring pattern sent through the signal sense module when the start signal is sensed by the signal sense module;
a monitoring pattern sensing section sensing the monitoring pattern sent through the signal sense module and generating a monitoring sense signal when the start signal is sensed by the signal sense module;
a monitoring request processing section monitoring the plurality of applications of the mobile terminal according to the plurality of monitoring requests stored in the monitoring request storage section based on the monitoring sense signal and then sending the plurality of monitoring results; and
a send module sending the plurality of monitoring results sent from the monitoring request processing section to the pattern sending and receiving section of the first PC via the internet.

13. A monitoring control method, comprising the steps of:
consecutively sending a plurality of monitoring requests for monitoring a plurality of applications of a mobile terminal via the internet; and
monitoring the plurality of applications according to the plurality of monitoring requests sent via the internet and then consecutively sending the plurality of monitoring results.

14. A monitoring control method, comprising the steps of:
generating a monitoring pattern including a plurality of monitoring requests for monitoring a plurality of applications of a mobile terminal;
sending the monitoring pattern to a unit for monitoring the mobile terminal; and
monitoring the plurality of applications according to the plurality of monitoring requests included in the monitoring pattern and then consecutively sending a plurality of monitoring results.

15. The method of claim 14, wherein the step of sending the monitoring pattern is the step of sequentially sending a start signal indicating the start of sending the monitoring pattern, the monitoring pattern and an end signal indicating the end of sending the monitoring pattern.
